(19)

Europäisches Patentamt

European Patent Office

Office européen des brevets

(11) **EP 4 480 988 A1**

(12) **EUROPEAN PATENT APPLICATION**
published in accordance with Art. 153(4) EPC

(43) Date of publication:
**25.12.2024 Bulletin 2024/52**

(21) Application number: **23756362.2**

(22) Date of filing: **14.02.2023**

(51) International Patent Classification (IPC):
*C08G 63/668* (2006.01)    *B32B 15/08* (2006.01)
*B32B 15/09* (2006.01)    *B65D 1/00* (2006.01)
*C09D 7/63* (2018.01)    *C09D 7/65* (2018.01)
*C09D 167/00* (2006.01)    *C23C 26/00* (2006.01)

(52) Cooperative Patent Classification (CPC):
**B32B 15/08; B32B 15/09; B65D 1/00;**
**C08G 63/668; C09D 7/63; C09D 7/65;**
**C09D 167/00; C23C 26/00**

(86) International application number:
**PCT/JP2023/004993**

(87) International publication number:
**WO 2023/157837 (24.08.2023 Gazette 2023/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.02.2022 JP 2022022124**

(71) Applicant: TOYOBO MC Corporation
**Osaka 530-0001 (JP)**

(72) Inventors:
• **OKAJIMA Hiroki**
**Otsu-shi, Shiga 520-0292 (JP)**
• **KANDA Ryosuke**
**Otsu-shi, Shiga 520-0292 (JP)**
• **GOSHIMA Hideto**
**Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **POLYESTER RESIN, AND COMPOSITION FOR COATING METAL PLATE**

(57) [Problems] An object of the present invention is to provide a polyester resin having excellent curability and further having processability, retort resistance, and dent resistance, and a composition for coating a metal plate, in which the polyester resin is used.

[Solution] A polyester resin comprising a polyvalent carboxylic acid component and a polyhydric alcohol component as copolymerization components, wherein the polyester resin satisfies the following requirements (i) to (iii). (i) the polyvalent carboxylic acid component constituting the polyester resin has 10 mol% or more of a polyvalent carboxylic acid component having a furan skeleton, (ii) the number of kinds of polyhydric alcohol components constituting the polyester resin is two or more, and (iii) the polyester resin has a glass-transition temperature of 70°C or higher.

**EP 4 480 988 A1**

## Description

TECHNICAL FIELD

The present invention relates to a polyester resin having excellent curability and a composition for coating a metal plate. More specifically, the present invention relates to a composition for coating a metal plate, which includes, as a main component, polyester resin having furandicarboxylic acid as a copolymerization component, and has excellent curability in particular and also has excellent processability and dent resistance.

BACKGROUND ART

Polyester resin is widely used as a raw material of a resin composition used for a coating material, a coating agent, an adhesive, and the like. Polyester resin is formed from polyvalent carboxylic acid and polyhydric alcohol in general. Control as to selection and combination of polyvalent carboxylic acid and polyhydric alcohol and as to whether the molecular weight of each of them is high or low can be freely performed, and the obtained polyester resin is used for various usages for coating materials, adhesives, and the like.

Metal cans such as drink cans and food cans have coatings formed of organic resins for preventing metals from being corroded due to foods (corrosion resistance) and preventing flavor and relish of contents from being impaired (flavor preservability). These coatings are required to have processability, corrosion resistance, adhesion to metal materials, and the like.

Patent Literature 1 discloses a polyester resin which is used for a can coating material, and is obtained by reaction between: an acid component formed of 80 to 100 mol% of aromatic dicarboxylic acid containing 70 to 95 mol% of terephthalic acid and 0 to 20 mol% of polybasic acid other than aromatic dicarboxylic acid; and a glycol component containing 2-methyl-1,3-propanediol and 1,4-cyclohexanedimethanol as essential components, and in which a content of 2-methyl-1,3 propanediol is 25 to 50 mol%, and the total weight of terephthalic acid and 1,4-cyclohexanedimethanol ranges from 45 to 65 weight% with respect to the polyester resin, and the polyester resin has excellent processability and stain resistance.

CITATION LIST

PATENT LITERATURE

[PTL 1] Japanese Laid-Open Patent Publication No. 2008-81617

DISCLOSURE OF THE INVENTION

PROBLEMS TO BE SOLVED BY THE INVENTION

However, with the recent diversification of can shapes, performance has been more strictly required for a can coating material. In such circumstances, there is a problem that processability and curability of the polyester for a can coating material as disclosed in Patent Literature 1 are not satisfactory. An object of the present invention is to provide a polyester resin having excellent curability and further having processability, retort resistance, and dent resistance, and a coating composition in which the polyester resin is used.

SOLUTION TO THE PROBLEMS

The inventors of the present invention have made diligent studies to achieve such an object, and as a result, the present invention has been completed. The present invention has the following constitutions of [1] to [10].

[1] A polyester resin comprising

a polyvalent carboxylic acid component and a polyhydric alcohol component as copolymerization components, wherein
the polyester resin satisfies the following requirements (i) to (iii).

(i) the polyvalent carboxylic acid component constituting the polyester resin has 10 mol% or more of a polyvalent carboxylic acid component having a furan skeleton,
(ii) the number of kinds of polyhydric alcohol components constituting the polyester resin is two or more, and

(iii) the polyester resin has a glass-transition temperature of 70°C or higher.

[2] The polyester resin according to [1], wherein the polyester resin has a reduced viscosity of 0.2 to 0.8 dl/g and an acid value of less than 70 eq/t, and has no melting point.

[3] The polyester resin according to [1] or [2], wherein the polyvalent carboxylic acid component constituting the polyester resin has at least one polyvalent carboxylic acid component selected from aromatic polyvalent carboxylic acid, aliphatic polyvalent carboxylic acid, and alicyclic polyvalent carboxylic acid in an amount of 5 mol% or more, in addition to the polyvalent carboxylic acid component having a furan skeleton.

[4] The polyester resin according to [1] to [3], wherein a total amount of a linear diol component and a diol component having a side chain in the polyhydric alcohol component is 50 mol% or more.

[5] The polyester resin according to [4], wherein a copolymerization ratio (molar ratio) of the diol component having a side chain is more than a copolymerization ratio of the linear diol component.

[6] The polyester resin according to [4] or [5], wherein the linear diol component is an ethylene glycol component.

[7] The polyester resin according to any one of [4] to [6], wherein the diol component having a side chain is a 1,2-propylene glycol component.

[8] The polyester resin according to any one of [1] to [7], wherein the polyester resin is used for coating a metal plate.

[9] A composition for coating a metal plate, the composition comprising:

the polyester resin according to any one of [1] to [8]; and
a curing agent, wherein
the polyester resin and the curing agent are included at a ratio of the polyester resin/the curing agent=98/2 to 50/50 (mass ratio).

[10] The composition for coating a metal plate according to [9], wherein the curing agent is at least one curing agent selected from an amino resin, a phenol resin, and an isocyanate compound.

[11] A laminated body comprising a layer including a reaction product of the polyester resin according to any one of [1] to [8], and a curing agent.

[12] A coated metal plate comprising:

the composition for coating a metal plate according to [9] or [10]; and
a metal plate, wherein
the composition for coating a metal plate is stacked on a surface of the metal plate.

[13] A can comprising the coated metal plate according to [12] as a constituent material.

[14] The polyester resin according to any one of [1] to [3], wherein

the total copolymerization ratio of the ethylene glycol component and the 1,2-propylene glycol component in the polyhydric alcohol component constituting the polyester resin is 50 mol% or more, and
the copolymerization ratio of the 1,2-propylene glycol component is more than the copolymerization ratio of the ethylene glycol component in terms of molar ratio.

[15] The polyester resin according to [14], wherein the polyester resin is used for coating a metal plate.

[16] A composition for coating a metal plate, the composition comprising:

the polyester resin according to [14]; and
a curing agent, wherein
the polyester resin and the curing agent are included at a ratio of the polyester resin/the curing agent=98/2 to 50/50 (mass ratio).

[17] The composition for coating a metal plate according to [16], wherein the curing agent is at least one curing agent selected from an amino resin, a phenol resin, and an isocyanate compound.

[18] A laminated body comprising a layer including a reaction product of the polyester resin according to [14] or [15], and a curing agent.

[19] A coated metal plate comprising:

the composition for coating a metal plate according to [17] or [18]; and
a metal plate, wherein
the composition for coating a metal plate is stacked on a surface of the metal plate.

[20] A can comprising the coated metal plate according to [19] as a constituent material.

ADVANTAGEOUS EFFECTS OF THE INVENTION

The polyester resin of the present invention has very high curability, and furthermore, the obtained coating film has excellent processability, and also has excellent retort resistance and dent resistance. Therefore, the polyester resin of the present invention is suitable for a material for coating a metal plate such as a can coating material and a precoat metal coating material. In addition, since the resin includes a non-petroleum-derived component, the resin can contribute to addressing environmental issues for, for example, inhibiting increase of carbon dioxide.

DESCRIPTION OF EMBODIMENTS

An embodiment of the present invention will be described below in detail.
The polyester resin of the present invention satisfies the following requirements (i) to (iii).

<Requirement (i)>

Requirement (i) will be described. The polyester resin of the present invention is required to have 10 mol% or more of a polyvalent carboxylic acid component having a furan skeleton in a polyvalent carboxylic acid component constituting the polyester resin. The content of the polyvalent carboxylic acid component having a furan skeleton is preferably 15 mol% or more, more preferably 20 mol% or more, and even more preferably 30 mol% or more. When the content of the polyvalent carboxylic acid component having a furan skeleton is made to be not less than the above-described lower limit, mobility of the polyester resin is enhanced, and the polarity is also enhanced, so that reactivity to a curing agent is enhanced, and curability of the polyester resin is enhanced. The sufficient film coating performance is obtained even at a low temperature, thereby contributing to reduction of energy during a coating process. Furthermore, a component which is derived from a non-petroleum component makes a large contribution to reduction of load on an environment. In the polyvalent carboxylic acid component constituting the polyester resin, the polyvalent carboxylic acid component having a furan skeleton is preferably 95 mol% or less, more preferably 90 mol% or less, and even more preferably 80 mol% or less. When the polyvalent carboxylic acid component having a furan skeleton is made to be not more than the above-described upper limit, flexibility of the polyester resin is enhanced, and dent resistance can be enhanced.
The polyvalent carboxylic acid component having a furan skeleton may be a component including a furan structure in a structure of the compound, and is, but is not particularly limited to, for example, furandicarboxylic acid. Specific examples thereof include 2,5-furandicarboxylic acid. When the polyester resin is produced, a derivative thereof may be used as a raw material. Examples of the derivative include C1 to C4 alkyl esters. Among them, methyl ester, ethyl ester, n-propyl ester, isopropyl ester, and the like., are preferable, and methyl ester is more preferable. One of the carboxylic acid having a furan skeleton and/or derivatives thereof may be used alone, or a mixture of two or more of them may be used.

<Requirement (ii)>

Requirement (ii) will be described. The number of kinds of polyhydric alcohol components constituting the polyester resin of the present invention needs to be two or more. When the number of kinds of the polyhydric alcohol components is two or more, flexibility and mobility of the polyester resin are enhanced, and processability is enhanced. Particularly, when linear polyhydric alcohol and polyhydric alcohol having a side chain are used in combination, appropriate bendability is imparted to the polyester resin, and both curability and processability can be enhanced. Furthermore, when, in addition to linear polyhydric alcohol and polyhydric alcohol having a side chain, tri- or higher functional polyhydric alcohol is used in combination, a crosslink density of a coating film is enhanced, and various physical properties such as retort resistance, dent resistance, and content resistance can be enhanced.

<Requirement (iii)>

Requirement (iii) will be described. The glass-transition temperature (Tg) of the polyester resin of the present invention needs to be 70°C or higher, and is preferably 72°C or higher, more preferably 74°C or higher, even more preferably 76°C or higher, and particularly preferably 78°C or higher. When the glass-transition temperature is lower than the above-described lower limit value, retort resistance and/or content resistance as well as dent resistance may become poor. The upper limit of the glass-transition temperature (Tg) is, but is not particularly limited to, 130°C or lower in general, and is preferably 120°C or lower and more preferably 110°C or lower. The Tg in the present invention is almost the same as $T_{ig}$ defined in JIS K 7121-1987, but is strictly a value determined in the method described in Examples.

<Polyester resin>

The glass-transition temperature (Tg) of the polyester resin of the present invention can be adjusted by changing copolymerization components and a ratio thereof. For example, the Tg tends to become high by increasing a copolymerization ratio of aromatic polycarboxylic acid or alicyclic polycarboxylic acid as the polyvalent carboxylic acid component constituting the polyester resin. Furthermore, the Tg tends to become high by increasing a copolymerization ratio of alicyclic polyhydric alcohol, or aliphatic polyhydric alcohol having, in a main chain, three or fewer carbon atoms, as the polyhydric alcohol component constituting the polyester resin. Meanwhile, the Tg tends to become low by increasing a copolymerization ratio of aliphatic polycarboxylic acid as the polyvalent carboxylic acid component constituting the polyester resin. Furthermore, the Tg tends to become low by increasing a copolymerization ratio of aliphatic polyhydric alcohol having, in a main chain, four or more carbon atoms as the polyhydric alcohol component constituting the polyester resin.

The reduced viscosity of the polyester resin of the present invention is preferably 0.2 to 0.8 dl/g, more preferably 0.25 to 0.75 dl/g, even more preferably 0.3 to 0.7 dl/g, and particularly preferably 0.35 to 0.6 dl/g. When the reduced viscosity is less than 0.2 dl/g, curability is insufficient, and a coating film has insufficient toughness, and processability may thus be reduced. Meanwhile, when the reduced viscosity is more than 0.8 dl/g, solubility to a solvent is reduced, and stability as a coating material may be reduced or coating operability may be reduced. The reduced viscosity can be adjusted by changing a polymerization time and temperature for the polyester resin, and a degree of pressure reduction in polymerization (in the case of polymerization under a reduced pressure). In the present invention, the reduced viscosity is a value determined by the method described in Examples.

The acid value of the polyester resin of the present invention is preferably less than 70 eq/t, more preferably 60 eq/t or less, even more preferably 50 eq/t or less, and particularly preferably 40 eq/t or less. When the acid value is more than the above-described upper limit value, reduction of water resistance of the polyester resin may cause reduction of dent resistance, retort resistance, content resistance, and the like.

The polyester resin of the present invention preferably has no melting point. Specifically, when the temperature is increased from -100°C to 250°C at 20°C/minute with use of a differential scanning calorimeter (DSC), no clear melting peak is preferably indicated in the temperature increase process. When no melting point is indicated, stability is enhanced when the polyester resin is dissolved in a solvent. In a case where the polyester resin indicates a melting point and has crystallinity, solubility with respect to a solvent and/or stability as a coating material may be reduced, and processability and/or dent resistance may be reduced.

As described above, the polyester resin of the present invention has 10 mol% or more of the polyvalent carboxylic acid component having a furan skeleton as the polyvalent carboxylic acid component. In addition to the polyvalent carboxylic acid component having a furan skeleton, the polyvalent carboxylic acid component constituting the polyester resin of the present invention preferably has at least one kind of polyvalent carboxylic acid component selected from aromatic polyvalent carboxylic acid, aliphatic polyvalent carboxylic acid, and alicyclic polyvalent carboxylic acid in an amount of 5 mol% or more, more preferably 10 mol% or more, even more preferably 20 mol% or more, and particularly preferably 30 mol% or more. When the content is made to be not less than the above-described lower limit value, solubility of the polyester resin is enhanced, and operability becomes good.

Examples of the polyvalent carboxylic acid component other than the polyvalent carboxylic acid component having a furan skeleton include aromatic polyvalent carboxylic acid components such as terephthalic acid, isophthalic acid, orthophthalic acid, 2,6-naphthalenedicarboxylic acid, 1,4-naphthalenedicarboxylic acid, 1,8-naphthalenedicarboxylic acid, trimellitic acid, pyromellitic acid, benzophenone tetracarboxylic acid, 5-sulfoisophthalic acid, 4-sulfonaphthalene-2,7-dicarboxylic acid, 5-[4-sulfophenoxy]isophthalic acid, and alkali metal salts thereof, aliphatic polyvalent carboxylic acid components such as succinic acid, glutaric acid, adipic acid, azelaic acid, sebacic acid, dodecanedioic acid, dimer acid, fumaric acid, maleic acid, itaconic acid, and citraconic acid, and alicyclic polyvalent carboxylic acid components such as 1,4-cyclohexanedicarboxylic acid, tetrahydrophthalic acid, hexahydroisophthalic acid, 1,2-cyclohexene dicarboxylic acid, and 2,5-norbomane dicarboxylic acid. One or more of them may be used. Among them, the aromatic polyvalent carboxylic acid component is preferable, and terephthalic acid, isophthalic acid, and 2,6-naphthalenedicarboxylic acid are particularly preferable from the viewpoint of reactivity, water resistance, and heat resistance.

Examples of the polyhydric alcohol component constituting the polyester resin of the present invention include: aliphatic glycols such as ethylene glycol, 1,2-propylene glycol, 1,3-propanediol, 2-methyl-1,3-propanediol, neopentyl glycol, 3-methyl-1,5-pentanediol, 1,2-butanediol, 1,3-butanediol, 1,4-butanediol, 1,5-pentanediol, 1,4-pentanediol, 1,3-pentanediol, 2,4-diethyl-1,5-pentanediol, 1,6-hexanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol; polyether glycols such as diethylene glycol, triethylene glycol, polyethylene glycol, polypropylene glycol, and polytetramethylene glycol; alicyclic polyhydric alcohols such as 1,2-cyclohexanedimethanol, 1,3-cyclohexanedimethanol, 1,4-cyclohexanedimethanol, tricyclodecane glycols, and hydrogenated bisphenols; and tri- or higher functional polyhydric alcohols such as glycerin, trimethylolethane, trimethylolpropane, mannitol, sorbitol, pentaerythritol, and $\alpha$-methyl glucoside. Two or more of them can be selected and used. Among them, linear aliphatic glycol having four or fewer carbon atoms and aliphatic glycol having a side chain and five or fewer carbon atoms are preferably used in combination from the viewpoint of retort resistance and content resistance. Examples of the linear aliphatic glycol having four or fewer carbon atoms include ethylene glycol, 1,3-propanediol, and 1,4-butanediol. Examples of the aliphatic glycol having a side chain and five or fewer carbon atoms include 1,2-propylene glycol, 2-methyl-1,3-propanediol, neopentyl glycol, 1,2-butanediol, 1,3-butanediol, 1,4-pentanediol, and 1,3-pentanediol. Among them, ethylene glycol as the linear aliphatic glycol having four or fewer carbon atoms, and 1,2-propylene glycol as the aliphatic glycol having a side chain and five or fewer carbon atoms are preferably used in combination. Preferably, in addition to ethylene glycol and 1,2-propylene glycol, trimethylolpropane as the tri- or higher functional polyhydric alcohol is further used in combination.

In a case where ethylene glycol is used as the polyhydric alcohol component constituting the polyester resin of the present invention, the copolymerization ratio of the ethylene glycol in the entire polyhydric alcohol component is preferably 5 mol% or more, more preferably 10 mol% or more, even more preferably 13 mol% or more, and particularly preferably 15 mol% or more. When the copolymerization ratio is the above-described lower limit value or more, curability, and retort resistance and/or content resistance may become better. Meanwhile, the copolymerization ratio of the ethylene glycol in the entire polyhydric alcohol component is preferably 45 mol% or less, more preferably 40 mol% or less, and even more preferably 35 mol% or less. When the copolymerization ratio is the above-described upper limit value or less, crystallinity of the polyester resin is reduced, and solubility to a solvent and/or stability as a coating material may become good.

When 1,2-propylene glycol is used as the polyhydric alcohol component constituting the polyester resin of the present invention, a copolymerization ratio of the 1,2-propylene glycol in the entire polyhydric alcohol component is preferably 45 mol% or more, more preferably 50 mol% or more, even more preferably 55 mol% or more, particularly preferably 60 mol% or more, and most preferably 65 mol% or more. When the copolymerization ratio is the above-described lower limit value or more, solubility to a solvent and/or stability as a coating material may become better. Meanwhile, the copolymerization ratio of the 1,2-propylene glycol in the entire polyhydric alcohol component is preferably 95 mol% or less, more preferably 90 mol% or less, even more preferably 85 mol% or less, and particularly preferably 80 mol% or less. When the copolymerization ratio is the above-described upper limit value or less, processability and/or curability may become better.

As the polyhydric alcohol component constituting the polyester resin of the present invention, a linear diol component and a diol component having a side chain are preferably used in combination. In the present invention, the linear diol represents aliphatic diol in which a hydrocarbon chain that connects between hydroxy groups located at both terminals of the molecule is not branched. Specific examples of the linear diol include ethylene glycol, 1,3-propanediol, 1,4-butanediol, 1,5-pentanediol, 1,6-hexanediol, and 1,9-nonanediol. In the present invention, the diol having a side chain represents aliphatic diol in which a hydrocarbon chain that connects between hydroxy groups located at both terminals of the molecule is branched. The number of the branches may be one or more. Specific examples of the diol having a side chain include 1,2-propylene glycol, 2-methyl-1,3-propanediol, neopentyl glycol, 3-methyl-1,5-pentanediol, 1,2-butanediol, 1,3-butanediol, 1,4-pentanediol, 1,3-pentanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, and 4-propyl-1,8-octanediol.

The total copolymerization ratio of the linear diol component and the diol component having a side chain in the entire polyhydric alcohol component is preferably 50 to 100 mol%, more preferably 60 to 100 mol%, even more preferably 70 to 100 mol%, particularly preferably 80 to 100 mol%, and most preferably 90 to 100 mol%. Within the above-described range, retort resistance and/or content resistance of the coating film tend to become better and dent resistance tends to be enhanced.

In a case where the linear diol component and the diol component having a side chain are used in combination as the polyhydric alcohol component constituting the polyester resin of the present invention, the copolymerization ratio of the diol component having a side chain is preferably more than the copolymerization ratio of the linear diol component in terms of molar ratio. A value obtained by subtracting the copolymerization ratio of the linear glycol component from the copolymerization ratio of the diol component having a side chain is preferably 10 mol% or more, more preferably 20 mol% or more, even more preferably 30 mol% or more, and particularly preferably 35 mol% or more. When the value is the above-described value or more, crystallinity of the polyester resin can be reduced, and solubility of the polyester resin to a solvent and/or coating material storage stability may be enhanced, and processability and/or dent resistance of the coating film may become better.

In a case where ethylene glycol and 1,2-propylene glycol are used as the polyhydric alcohol component constituting the polyester resin of the present invention, the total copolymerization ratio of the ethylene glycol and the 1,2-propylene glycol in the entire polyhydric alcohol component is preferably 50 to 100 mol%, more preferably 60 to 100 mol%, even more preferably 70 to 100 mol%, particularly preferably 80 to 100 mol%, and most preferably 90 to 100 mol%. When the total copolymerization ratio is made to be within the above-described range, retort resistance and/or content resistance tend to become better, and dent resistance tends to be enhanced.

In a case where ethylene glycol and 1,2-propylene glycol are used as the polyhydric alcohol component constituting the polyester resin of the present invention, the copolymerization ratio of the 1,2-propylene glycol component is preferably more than the copolymerization ratio of the ethylene glycol component in terms of molar ratio. A value obtained by subtracting the copolymerization ratio of the ethylene glycol from the copolymerization ratio of the 1,2-propylene glycol is preferably 10 mol% or more, more preferably 20 mol% or more, even more preferably 30 mol% or more, and particularly preferably 35 mol% or more. When the value is the above-described value or more, crystallinity of the polyester resin can be reduced, and solubility of the polyester resin to a solvent and/or coating material storage stability may be enhanced, and processability and/or dent resistance of the coating film may become better.

In the polyester resin of the present invention, the polyvalent carboxylic acid component and/or the polyhydric alcohol component may be copolymerized with a tri- or higher functional component. Examples of the tri- or higher functional polyvalent carboxylic acid component include trimellitic acid, pyromellitic acid, and benzophenone tetracarboxylic acid. Examples of the tri- or higher functional polyhydric alcohol component include glycerin, trimethylolethane, trimethylolpropane, mannitol, sorbitol, pentaerythritol, and $\alpha$-methyl glucoside. By using these components, a crosslink density is enhanced when curing is performed, and processability can be enhanced. Particularly, trimellitic acid or trimethylolpropane is preferably used from the viewpoint of a crosslink density and processability at a time of curing.

In a case where copolymerization of the tri- or higher functional polyvalent carboxylic acid component and/or polyhydric alcohol component is performed, a copolymerization ratio of the tri- or higher functional component in the polyvalent carboxylic acid component or the polyhydric alcohol component is preferably 0 to 5 mol%, more preferably 0 to 4 mol%, even more preferably 0.1 to 3 mol%, and particularly preferably 0.1 to 2 mol%. When the copolymerization ratio is more than the above-described upper limit value, flexibility of the polyester resin is lost, and processability and/or dent resistance may be reduced, or gelation may occur during polymerization of polyester.

The acid value may be imparted to the polyester resin of the present invention by any method. By imparting the acid value, effects of, for example, enhancing curability with a curing agent, and improving adhesion to a metal material for a can may be obtained Examples of the method for imparting the acid value include a depolymerization method in which polyvalent carboxylic acid anhydride is added at a late stage of polycondensation, and a method in which a prepolymer (oligomer) is caused to have a high acid value at the stage of the prepolymer, and is subsequently subjected to polycondensation to obtain the polyester resin having the acid value. From the viewpoint of facilitating an operation and easily obtaining a target acid value, the former method, i.e., the depolymerization method, is preferable.

Examples of the polyvalent carboxylic acid anhydride used for imparting acid in the depolymerization method include phthalic anhydride, tetrahydrophthalic anhydride, succinic anhydride, maleic anhydride, trimellitic anhydride, pyromellitic anhydride, hexahydrophthalic anhydride, and ethylene glycol bisanhydrotrimellitate. Trimellitic anhydride is preferable.

When the polyester resin of the present invention is produced, for example, a titanium compound such as tetra-n-butyl titanate, tetraisopropyl titanate, and titanium oxyacetylacetonate, an antimony compound such as antimony trioxide and tributoxyantimony, a germanium compound such as germanium oxide and tetra-n-butoxy germanium, and acetates of magnesium, iron, zinc, manganese, cobalt, and aluminum can be used as a polymerization catalyst. One of the catalysts may be used alone, or two or more of them may be used in combination.

Examples of a polycondensation method for producing the polyester resin of the present invention include, but are not particularly limited to, 1) a method in which polyvalent carboxylic acid and polyhydric alcohol are heated in the presence of any catalyst, and, through dehydration esterification, dealcoholization of the polyhydric alcohol and polycondensation are performed, and 2) a method in which alcohol ester of polyvalent carboxylic acid, and polyhydric alcohol are heated in the presence of any catalyst, and, through transesterification, dealcoholization of the polyhydric alcohol and polycondensation are performed. In the above-described methods 1) and 2), a part or the entirety of the polyvalent carboxylic acid component may be substituted with acid anhydride. Various additives, stabilizers, and the like may be added according to the purpose of usage and various required characteristics to the extent that other intrinsic properties of the thermoplastic resin are not impaired.

For the polyester resin of the present invention, an antioxidant, an ultraviolet absorber, a stabilizer, and the like may be used as necessary. Examples of the antioxidant include, but are not particularly limited to, hindered phenol-based antioxidants such as 1,3,5-tris(3,5-di-t-butyl-4-hydroxybenzyl)isocyanurate, 1,1,3-tri(4-hydroxy-2-methyl-5-t-butylphenyl)butane, 1,1-bis(3-t-butyl-6-methyl-4-hydroxyphenyl) butane, 3,5-bis(1,1-dimethylethyl)-4-hydroxy-benzene propanoic acid, and pentaerythritol tetrakis(3,5-di-t-butyl-4-hydroxyphenyl)propionate. Furthermore, examples of phosphorus-based antioxidants include, but are not particularly limited to, 3,9-bis(p-nonylphenoxy)-2,4,8,10-tetraoxa-3,9-diphosphaspiro [5.5]undecane, 3,9-bis(octadecyloxy)-2,4,8,10-tetraoxa-3,9-diphosphaspiro[5.5]undecane, tri(monononylphenyl)phosphite, triphenoxyphosphine, and isodecyl phosphite. One of them may be used alone, or they may be used in combination. An added amount is preferably 0.1 mass% or more and 5 mass% or less in terms of the mass of the polyester resin. When the added amount is less than 0.1 mass%, an effect of preventing thermal deterioration may become poor. When the added amount is more than 5 mass%, a color tone may be negatively affected.

<Composition for coating metal plate>

The composition for coating a metal plate according to the present invention is a composition including the polyester resin of the present invention, and it is preferable that the composition further includes a curing agent. As a ratio between the polyester resin and the curing agent, a ratio of the polyester resin/the curing agent is preferably 98/2 to 50/50 (mass ratio), more preferably 95/5 to 60/40 (mass ratio), even more preferably 92/8 to 70/30 (mass ratio), and particularly preferably 90/10 to 75/25 (mass ratio). When an amount of the curing agent is less than 2 parts by mass relative to 98 parts by mass of the polyester resin, sufficient curability is not obtained, and processability, retort resistance, content resistance, and/or dent resistance may be reduced. When an amount of the curing agent is more than 50 parts by mass relative to 50 parts by mass of the polyester resin, an unreacted curing agent component remains, and dent resistance, retort resistance, and content resistance may be reduced.

<Curing agent>

The curing agent constituting the composition for coating a metal plate according to the present invention is not particularly limited as long as the curing agent reacts with the polyester resin of the present invention to form a crosslinked structure, and examples of the curing agent include an isocyanate compound, phenol resin, amino resin, and epoxy resin. Among them, phenol resin, amino resin and an isocyanate compound are preferable from the viewpoint of hygiene and reactivity. Furthermore, an isocyanate compound is more preferable from the viewpoint of processability, and a blocked isocyanate compound is further preferable.

Examples of the isocyanate compound include: aromatic diisocyanate such as 2,4-tolylene diisocyanate, 2,6-tolylene diisocyanate, xylene-1,4-diisocyanate, xylene-1,3-diisocyanate, tetramethylxylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; aromatic polyisocyanate such as polymethylene polyisocyanate and crude tolylene diisocyanate; aliphatic diisocyanate such as tetramethylene diisocyanate, hexamethylene diisocyanate (HDI), decamethylene diisocyanate, and lysine diisocyanate; alicyclic diisocyanate such as isophorone diisocyanate (IPDI), hydrogenated tolylene diisocyanate, hydrogenated xylene diisocyanate, and hydrogenated diphenylmethane diisocyanate; biurets of the aforementioned isocyanates; uretdione-modified products thereof, carbodiimide-modified products thereof; isocyanurate-modified products thereof; uretonimine-modified products thereof, adducts of the aforementioned isocyanates with polyol; and mixed modified products thereof. One of them may be used alone, or two or more of them may be selected and used. They may be used in the form of a urethane precursor such as a prepolymer formed from an isocyanate compound and an active-hydrogen-containing compound such as polyol and polyamine, a modified product thereof, a derivative thereof, and a mixture thereof.

As the isocyanate compound, a blocked isocyanate compound in which terminal NCO groups of an isocyanate compound are blocked is preferably used. Examples of the blocking agent include phenol-based compounds such as phenol, cresol, ethylphenol, and butylphenol; alcohol-based compounds such as 2-hydroxypyridine, butyl cellosolve, propylene glycol monomethyl ether, benzyl alcohol, methanol, ethanol, n-butanol, isobutanol, and 2-ethylhexanol; active methylene-based compounds such as dimethyl malonate, diethyl malonate, methyl acetoacetate, ethyl acetoacetate, and acetylacetone; mercaptan-based compounds such as butyl mercaptan and dodecyl mercaptan; acid amide-based compounds such as acetanilide and acetic acid amide; lactam-based compounds such as ε-caprolactam, δ-valerolactam, and γ-butyrolactam; imidazole-based compounds such as imidazole and 2-methylimidazole; urea-based compounds such as urea, thiourea, and ethylene urea; oxime-based compounds such as formamidoxime, acetaldehydeoxime, acetone oxime, methyl ethyl ketoxime, methyl isobutyl ketoxime, and cyclohexanone oxime; and amine-based compounds such as diphenylaniline, aniline, carbazole, ethyleneimine, and polyethyleneimine. One of them may be used alone, or two or more of them may be mixed and used.

Reaction between such a blocking agent and the isocyanate curing agent component can be performed at, for example, 20 to 200°C, by using a known inert solvent or catalyst as necessary. An amount of the blocking agent to be used is preferably 0.7 to 1.5 times the mole of the terminal isocyanate groups.

The phenol resin is preferably resol-type phenol resin synthesized from a phenol compound. Examples of a tri- or higher functional phenol compound include phenol, m-cresol, methylphenol, 3,5-xylenol, m-methoxyphenol, bisphenol-A, and bisphenol-F. Examples of a bifunctional phenol compound include o-cresol, p-cresol, p-tert-butylphenol, p-ethylphenol, 2,3-xylenol, and 2,5-xylenol. Each of them has two or more functional groups capable of methylolation, per one molecule of the phenol compound, and can be synthesized by methylolation with formaldehyde or the like. One of them may be used alone, or two or more of them may be mixed and used.

A blending ratio between the tri- or higher functional phenol compound and the bifunctional phenol compound may be discretionarily determined according to the required coating film (cured film), but is preferably 1/99 to 100/0 (parts by mass). For example, in a case where the coating film is required to have hardness and acid resistance, the tri- or higher functional phenol compound is preferably blended by more than 30 parts by mass. In a case where the coating film is required to have flexibility, and a residual stress is to be low after processing, the tri- or higher functional phenol compound is preferably blended by less than 50 parts by mass.

Examples of formaldehydes used for forming the phenol compounds into phenol resin include formaldehyde, paraformaldehyde, and trioxane. One of them may be used alone, or two or more of them may be mixed and used.

As alcohol used for alkyl-etherifying a part of methylol groups of methylolated phenol resin, C1 to C8 monohydric alcohol can be used and C1 to C4 monohydric alcohol can be preferably used. Examples of the alcohol include methanol, ethanol, n-propanol, n-butanol, isopropanol, isobutanol, and tert-butanol. n-butanol is preferable from the viewpoint of compatibility with the polyester resin and reaction curability.

The phenol resin has 0.3 or more alkoxymethyl groups on average and preferably has 0.5 to 3 alkoxymethyl groups on average per one phenol nucleus from the viewpoint of reactivity to and compatibility with the polyester resin. When the number of the alkoxymethyl groups is less than 0.3, curability with the polyester resin may become poor and processability may be reduced.

As a method for obtaining the phenol resin in which the tri- or higher functional phenol compound and the bifunctional phenol compound are mixed as the phenol compound, a method in which the phenol compounds are mixed at any ratio before being formed into phenol resin by formaldehydes, or a method in which the tri- or higher functional phenol compound and the bifunctional phenol compound are separately formed into phenol resins, and the phenol resins are mixed at any mixing ratio, may be used.

Examples of the amino resin include methylolated amino resins obtained by reaction between an amino component such as melamine, urea, benzoguanamine, acetoguanamine, steroguanamine, spiroguanamine, and dicyandiamide, and an aldehyde component such as formaldehyde, paraformaldehyde, acetaldehyde, and benzaldehyde. The amino resin also includes amino resin obtained by etherifying methylol groups of the methylolated amino resin with C 1 to C6 alcohol. One of them may be used alone, or two or more of them may be used in combination. Amino resin in which benzoguanamine or melamine is used, is preferable.

Preferable examples of the amino resin in which benzoguanamine is used include methyl\-etherified benzoguanamine resin obtained by etherifying a part or the entirety of methylol groups of methylolated benzoguanamine resin, with methyl alcohol, butyl-etherified benzoguanamine resin obtained by butyl-etherification with butyl alcohol, and mixed etherified benzoguanamine resin of methyl ether and butyl ether obtained by etherification with both methyl alcohol and butyl alcohol. The butyl alcohol is preferably isobutyl alcohol or n-butyl alcohol.

Preferable examples of the amino resin in which melamine is used include methyl-etherified melamine resin obtained by etherifying a part or the entirety of methylol groups of methylolated melamine resin with methyl alcohol, butyl-etherified melamine resin obtained by butyl-etherification with butyl alcohol, and mixed etherified melamine resin of methyl ether and butyl ether obtained by etherification with both methyl alcohol and butyl alcohol.

<Additive>

Preferably, the composition for coating a metal plate according to the present invention further includes a catalyst. When a catalyst is included, performance of the cured film can be enhanced. In a case where the curing agent is phenol resin or amino resin, examples of the catalyst include sulfuric acid, p-toluenesulfonic acid, dodecylbenzenesulfonic acid, naphthalenesulfonic acid, dinonylnaphthalenesulfonic acid, dinonylnaphthalenedisulfonic acid, camphorsulfonic acid, phosphoric acid, and products obtained by blocking them by amine (partially neutralized by adding amine). One of them may be used alone, or two or more of them may be used in combination. Dodecylbenzenesulfonic acid and a neutralized product thereof are preferable from the viewpoint of compatibility with the polyester resin and hygiene. In a case where the curing agent is the isocyanate compound, examples of the catalyst include organotin compounds such as stannous octoate and dibutyltin dilaurate, triethylamine, zinc compounds, and aluminum compounds. One of them may be used alone, or two or more of them may be used in combination.

In the composition for coating a metal plate according of the present invention, according to required characteristics, a known inorganic pigment such as titanium oxide and silica, and a known additive such as phosphoric acid and esterified products thereof, a surface smoother, a defoamer, a dispersant, and a lubricant can be blended. Particularly, a lubricant is important in order to impart lubricity to a coating film, which is required when DI cans, DR (or DRD) cans, and the like are formed. Preferable examples of the lubricant include fatty acid ester wax which is an esterified product of a polyol compound and fatty acid, silicon-based wax, fluorine-based wax, polyolefin wax such as polyethylene, lanolin-based wax, montan wax, microcrystalline wax, and carnauba wax. One of the lubricants may be used alone, or two or more of them may be mixed and used.

The composition for coating a metal plate according to the present invention can be formed into a coating material in a state of being dissolved in a known organic solvent. Examples of the organic solvent used for forming the coating material include toluene, xylene, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, and SOLVESSO. One or more of them is selected and used in consideration of solubility, an evaporation rate, and the like.

Another resin can be blended with the composition for coating a metal plate according to the present invention for the purpose of modification for, for example, imparting flexibility and adhesion to the coating film. Examples of the other resin include ethylene-polymerizable unsaturated carboxylic acid copolymers, and ethylene-polymerizable carboxylic acid copolymer ionomers. By blending at least one kind of the resins selected from them, flexibility and/or adhesion can be imparted to the coating film in some cases.

The composition for coating a metal plate according to the present invention can be applied to various known base materials. Examples of the base material include, but are not particularly limited to, a tin-free steel plate, a tin plate, a bonderized steel plate, a zinc-plated steel plate, aluminum, and stainless steel. The metal plates formed of these metal materials may be subjected beforehand to phosphoric acid treatment, chromic acid chromate treatment, phosphoric acid chromate treatment, other anticorrosion treatment by a rust inhibitor, or surface treatment for enhancing adhesion of the coating film, and used.

A method for applying the composition to the base material is not particularly limited, and, for example, a bar coater, curtain flow coating, roll coating, dipping, spray, and brush coating can be used. An amount to be applied is not particularly limited, and is adjusted such that the thickness of the coating film after drying is about 1 to 30 $\mu$m in general and preferably about 5 to 15 $\mu$m.

Baking for the coating film is performed at a range of about 100 to 300°C for about five seconds to about 30 minutes in general, and more preferably at a range of about 150 to 250°C for about 20 seconds to about 15 minutes.

The composition for coating a metal plate according to the present invention is stacked on a surface of a metal plate, and is suitably used as a coated metal plate. The coated metal plate can be applied as a constituent material of a can, and examples of the can that includes the coated metal plate as the constituent material include drink cans, cans for canned foods, and lids or caps thereof.

EXAMPLES

The present invention will be described below in more detail by way of examples. However, the present invention is not limited to these examples. Various characteristics were evaluated by the following methods. Simple description as parts represents parts by mass. % represents mass%.

<Polyester resin>

(1) Measurement of resin composition

A sample of the polyester resin was dissolved in deuterated chloroform, and 1H-NMR analysis was performed by using a nuclear magnetic resonance (NMR) device 400-MR manufactured by VARIAN. The molar ratio was obtained from the obtained integration value ratio.

(2) Measurement of reduced viscosity ($\eta$sp/c, unit: dl/g)

In 25 cc of a mixture solvent of phenol/tetrachloroethane (mass ratio of 6/4), 0.1 g of the sample of the polyester resin was dissolved, and the reduced viscosity was measured at 30°C.

(3) Measurement of glass-transition temperature (Tg), melting point (Tm)

Measurement was performed by a differential scanning calorimeter (manufactured by SII, DSC-200). In a snap-in-lid-type aluminum container, 5 mg of the sample of the polyester resin was placed and sealed, and cooled to -50°C by using liquid nitrogen. Subsequently, the temperature was increased to 250°C at 20°C/minute. In the endothermic curve obtained in this process, the temperature at the intersection of a baseline before appearance of an endothermic peak and a tangent toward the endothermic peak was determined as the glass transition temperature (Tg, unit: °C). Furthermore, the maximum peak temperature of heat of fusion was determined as the melting point (Tm, unit: °C). In a case where the maximum peak of heat of fusion was not observed, a melting point was not indicated (in Table 1, "-" is indicated).

(4) Measurement of acid value

In 40 ml of chloroform, 0.2 g of the sample of the polyester resin was dissolved, and the obtained product was subjected to titration by using 0.01 N potassium hydroxide ethanol solution, and an equivalent (eq/t) per $10^6$ g of the polyester resin was obtained. Phenolphthalein was used as an indicator.

<Production of composition for coating metal plate>

In accordance with the blending ratio in Table 2, the polyester resin, the curing agent, and the catalyst were dissolved at cyclohexanone/SOLVESSO-150=1/1(mass ratio) such that a solid content was about 35 mass%, and the composition for coating a metal plate was obtained.

(5) Evaluation of curability

Curability of the polyester resin was evaluated as follows. The composition for coating a metal plate was applied onto copper foil such that the thickness was 10 μm after drying, and cured by baking under a baking condition of 200°C (PMT: peak base material temperature) for 10 minutes or a baking condition of 190°C (PMT: peak base material temperature) for 30 seconds, and a sample having a longitudinal dimension of 10 cm and a transverse dimension of 2.5 cm was obtained. (X) represents the mass of the sample before being immersed in THF (tetrahydrofuran), and (Y) as the mass after immersion in THF represents the mass of the sample which was immersed in 60 ml of THF at 25°C for one hour, and thereafter dried at 100°C for ten minutes. The curability was obtained by the following formula.

$$\text{Gel fraction (mass\%)} = [\{(Y) - \text{mass of copper foil}\}/\{(X) - \text{mass of copper foil}\}] \times 100$$

(Criteria)

  Excellent: the gel fraction was 90 mass% or more
  Good: the gel fraction was 80 mass% or more and less than 90 mass%
  Acceptable: the gel fraction was 60 mass% or more and less than 80 mass%
  Poor: the gel fraction was less than 60 mass%

<Production of test piece>

The composition for coating a metal plate was applied to one surface of a tin plate (JIS G 3303 (2008) SPTE, 70 mm×150 mm×0.3 mm) with a bar coater such that the film thickness was 10±2 μm after drying, and was cured by baking under a baking condition of 200°C (PMT: peak base material temperature) for ten minutes or a baking condition of 190°C (PMT: peak base material temperature) for 30 seconds, and the obtained product was used as a test piece (hereinafter, referred to as test piece).

(6) Evaluation of processability

The test piece was bent by 180° in such a direction that the cured film was on the outer side, and an electrical current value was measured at a crack generated at the bent portion in the cured film, thereby evaluating processability. The test piece was bent by interposing no object (so-called 0T). A sponge (width of 20 mm, depth of 50 mm, thickness of 10 mm) immersed in 1% NaCl aqueous solution was prepared so as to be placed on an aluminum plate electrode (width of 20 mm, depth of 50 mm, thickness of 0.5 mm), and the bent portion of the test piece was brought into contact with the sponge near the center portion of the bent portion so as to be parallel to the 20 mm side of the sponge. DC voltage of 5.0 V was applied across the aluminum plate electrode and a non-coated portion of the back surface of the test piece, and the electrical current value was measured. A smaller electrical current value indicates a better bending characteristic.

(Criteria)

  Good: less than 0.5 mA
  Acceptable: 0.5 mA or more and less than 2.0 mA
  Poor: 2.0 mA or more

(7) Evaluation of retort resistance

The test piece was placed so as to stand in a stainless steel cup, ion-exchanged water was poured into the cup until the height of the water reached half the height of the test piece, and the obtained product was set in an autoclave of a retort testing machine (manufactured by TOMY KOGYO CO., LTD., ES-315), and was subjected to retort treatment at 125°C for 30 minutes. Evaluation after the treatment was performed at a vapor contact portion which was likely to be subjected to more severe conditions in general for the cured film, and blushing and blister of the cured film were visually determined as follows.

(Criteria)

Good: Good (no blushing and no blister occurred/blushing slightly occurred but no blister occurred)
Acceptable: Some blushing and/or some blisters occurred
Poor: Remarkable blushing and/or remarkable blister occurred

(8) Evaluation of dent resistance

The test piece that was subjected to the retort treatment indicated in (7) was placed such that the coated surface of the test piece was on the lower side, and a drop punch with a ball head portion having a diameter of 1/2 inch was pressed against the non-coated surface of the test piece with which vapor came into contact, by using a DuPont impact tester. A 1 kg weight was dropped from a height of 50 cm above the test piece to apply impact. Subsequently, a sponge (width of 20 mm, depth of 50 mm, thickness of 10 mm) immersed in 1 mass% of NaCl aqueous solution was prepared so as to be placed on an aluminum plate electrode (width of 20 mm, depth of 50 mm, thickness of 0.5 mm), and the protrusion of the test piece to which the impact was applied, was brought into contact with the sponge. DC voltage of 5.0 V was applied across the aluminum plate electrode and a non-coated portion of the back surface of the test piece, and the electrical current value was measured. A smaller electrical current value indicates a better bending characteristic.

(Criteria)

Good: less than 0.5 mA
Acceptable: 0.5 mA or more and less than 2.0 mA
Poor: 2.0 mA or more

Synthesis example of polyester resin

Synthesis of polyester resin (Synthesis example 1)

In a 3 L flask having a stirrer, a capacitor, and a thermometer, 810 parts by mass of 2,5-furandicarboxylic acid, 128 parts by mass of ethylene glycol, 629 parts by mass of 1,2-propylene glycol, 6 parts by mass of trimethylolpropane, and 0.5 parts by mass of tetra-n-butyl titanate (hereinafter, may be abbreviated as TBT) as a catalyst (0.03 mol% with respect to the entire polyvalent carboxylic acid component) were put, and esterification was performed while the temperature was increased from 160°C to 230°C over four hours. Subsequently, the pressure was gradually reduced in the system to 5 mmHg over 20 minutes, initial polymerization was performed and the temperature was increased to 250°C, and late-stage polymerization was further performed under a vacuum of 1 mmHg or less for 120 minutes, to obtain the polyester resin (Synthesis example 1). The obtained polyester resin had a reduced viscosity of 0.50 dl/g, an acid value of 65 eq/t, and a glass-transition temperature (Tg) of 79°C. No melting point was observed.

Synthesis of polyester resin (Synthesis example 2), (Comparative synthesis example 1) to (Comparative synthesis example 4)

The polyester resin of (Synthesis example 2) and the polyester resins of (Comparative synthesis example 1) to (Comparative synthesis example 4) each having a resin composition indicated in Table 1 were each produced as in (Synthesis example 1) except that the composition to be put was changed.

[Table 1]

| | | | Synthesis example 1 | Synthesis example 2 | Comparative synthesis example 1 | Comparative synthesis example 2 | Comparative synthesis example 3 | Comparative synthesis example 4 |
|---|---|---|---|---|---|---|---|---|
| Composition | Polyvalent carboxylic acid component (mol%) | Furandicarboxylic acid | 100 | 37 | | | 47 | 100 |
| | | Terephthalic acid | | 63 | 100 | 99.5 | | |
| | | Isophthalic acid | | | | | 42 | |
| | | Sebacic acid | | | | | 11 | |
| | | Trimellitic anhydride | | | | 0.5 | | |
| | Polyhydric alcohol component (mol%) | Ethylene glycol | 26 | 33 | 15 | 10 | 52 | 100 |
| | | 1,2-propylene glycol | 73 | 66 | 25 | 75 | | |
| | | Neopentyl glycol | | | | | 48 | |
| | | 1,4-cyclohexanedimethanol | | | | 15 | | |
| | | 2-methyl-1,3-propanediol | | | 60 | | | |
| | | Trimethylolpropane | 1 | 1 | | | | |
| Physical property | | $\eta$sp/c (dl/g) | 0.50 | 0.53 | 0.55 | 0.55 | 0.52 | 0.65 |
| | | Acid value (eq/t) | 65 | 20 | 15 | 5 | 15 | 20 |
| | | Tg (°C) | 79 | 83 | 65 | 83 | 41 | 76 |
| | | Tm (°C) | - | - | - | - | - | 202 |

A composition for coating a metal plate was produced by using the obtained polyester resin, and curability, processability, retort resistance, and dent resistance were evaluated. Table 2 indicates the blending ratio in the composition for coating a metal plate and the evaluation results.

As the curing agent, the following ones were used.

Cymel 303: methylated melamine manufactured by Allnex
Cymel 1123: methylated/ethylated benzoguanamine manufactured by Allnex
Phenodur PR521: phenol curing agent manufactured by Allnex
Desmodur BL 2078/2: isophorone diisocyanate-based blocked isocyanate manufactured by Sumika Covestro Urethane Company, Ltd.

As the curing catalyst, the following ones were used.

Nacure5076: dodecylbenzenesulfonic acid manufactured by King Industries
K-KAT XK-626: non-tin-based urethane curing catalyst manufactured by King Industries

[Table 2]

| | | | Example 1 | Example 2 | Comparative example 1 | Example 3 | Comparative example 2 | Example 4 | Example 5 | Comparative example 3 | Comparative example 4 | Comparative example 5 | Comparative example 6 |
|---|---|---|---|---|---|---|---|---|---|---|---|---|---|
| Blending composition (solid mass ratio) | Polyester resin | Kinds | Synthesis example 1 | Synthesis example 2 | Comparative synthesis example 3 | Synthesis example 1 | Comparative synthesis example 1 | Synthesis example 1 | Synthesis example 2 | Comparative synthesis example 1 | Comparative synthesis example 2 | Comparative synthesis example 3 | Comparative synthesis example 4 |
| | | Blending amount | 85 | 85 | 85 | 85 | 85 | 85 | 85 | 88 | 80 | 85 | 85 |
| | Curing agent | Cymel303 | 7.5 | 7.5 | 7.5 | | | | | | | | |
| | | Cymel1123 | 7.5 | 7.5 | 7.5 | | | | | | | | |
| | | Phenodur PR521 | | | | 15 | 15 | | | | | | |
| | | Desmodur BL 2078/2 | | | | | | 15 | 15 | 12 | 20 | 15 | 15 |
| | | Na-cure5076 | 0.1 | 0.1 | 0.1 | 0.1 | 0.1 | | | | | | |
| | Curing catalyst | K-KAT XK-626 | | | | | | 0.5 | 0.5 | 0.5 | 0.5 | 0.5 | 0.5 |
| Baking condition | | PMT | 190°C | 190°C | 190°C | 190°C | 190°C | 200°C | 200°C | 200°C | 200°C | 200°C | 200°C |
| | | Time | 30 seconds | 30 seconds | 30 seconds | 30 seconds | 30 seconds | 10 minutes | 10 minutes | 10 minutes | 10 minutes | 10 minutes | 10 minutes |
| Curability | | Gel fraction (%) | 95 | 93 | 25 | 64 | 44 | 98 | 99 | 66 | 53 | 81 | Could not be dissolved |
| | | Criteria | Excellent | Excellent | Poor | Acceptable | Poor | Excellent | Excellent | Acceptable | Poor | Good | |
| Coating performance | | Processability | Good | Good | Good | Good | Good | Good | Good | Good | Poor | Good | |
| | | Retort resistance | Good | Good | Poor | Acceptable | Poor | Good | Good | Acceptable | Good | Poor | |
| | | Dent resistance | Acceptable | Good | Poor | Acceptable | Poor | Acceptable | Good | Poor | Acceptable | Poor | |

As is apparent from Table 2, in Examples 1 and 2 in which amino resin was used as the curing agent, curability/processability/retort resistance/dent resistance were good. Meanwhile, in Comparative example 1, the Tg of the polyester resin was 41°C , which waslow, so that retort resistance/dent resistance were insufficient. In Example 3 in which phenol resin was used as the curing agent, as compared with Comparative example 2 in which the polyester resin having no furan skeleton was used, curability became good, and processability/retort resistance, and dent resistance were also enhanced. Meanwhile, in Comparative example 2, since the polyester resin had no furan skeleton, curability was reduced, and retort resistance and dent resistance were also poor. In Examples 4 and 5 in which the isocyanate-based curing agent was used as the curing agent, curability was very excellent, and all of processability/retort resistance/dent resistance were good. Meanwhile, in Comparative examples 3 and 4 in which the polyester resin having no furan skeleton was used, curability was insufficient, and processability and dent resistance were also insufficient. In Comparative example 5 in which the polyester resin having a furan skeleton but having a low Tg was used, curability was sufficient but retort resistance/dent resistance were insufficient. In Comparative example 6 in which the number of kinds of glycol used in the polyester resin was merely one, the polyester resin had a melting point and insufficient solubility to a solvent, and was not able to be dissolved in the solvent, and the coating film performance was not able to be evaluated. Thus, the composition for coating a metal plate in which the polyester resin of the present invention was used, had excellent reactivity to the curing agent, and the obtained cured film (coating film) was excellent in all of processability, retort resistance, and dent resistance.

INDUSTRIAL APPLICABILITY

The products of the present invention are the polyester resin having excellent curability, processability, retort resistance, and dent resistance, and the composition for coating a metal plate and the coated metal plate, each of which includes the polyester resin, and are suitable as a main agent of the composition for coating a metal plate as used for metal cans of foods and drinks and for precoated metal coating.

**Claims**

1.   A polyester resin comprising

   a polyvalent carboxylic acid component and a polyhydric alcohol component as copolymerization components, wherein
   the polyester resin satisfies the following requirements (i) to (iii).

      (i) the polyvalent carboxylic acid component constituting the polyester resin has 10 mol% or more of a polyvalent carboxylic acid component having a furan skeleton,
      (ii) the number of kinds of polyhydric alcohol components constituting the polyester resin is two or more, and
      (iii) the polyester resin has a glass-transition temperature of 70°C or higher.

2.   The polyester resin according to claim 1, wherein the polyester resin has a reduced viscosity of 0.2 to 0.8 dl/g and an acid value of less than 70 eq/t, and has no melting point.

3.   The polyester resin according to claim 1 or 2, wherein the polyvalent carboxylic acid component constituting the polyester resin has at least one polyvalent carboxylic acid component selected from aromatic polyvalent carboxylic acid, aliphatic polyvalent carboxylic acid, and alicyclic polyvalent carboxylic acid in an amount of 5 mol% or more, in addition to the polyvalent carboxylic acid component having a furan skeleton.

4.   The polyester resin according to any one of claims 1 to 3, wherein a total amount of a linear diol component and a diol component having a side chain in the polyhydric alcohol component is 50 mol% or more.

5.   The polyester resin according to claim 4, wherein a copolymerization ratio (molar ratio) of the diol component having a side chain is more than a copolymerization ratio of the linear diol component.

6.   The polyester resin according to claim 4 or 5, wherein the linear diol component is an ethylene glycol component.

7.   The polyester resin according to any one of claims 4 to 6, wherein the diol component having a side chain is a 1,2-propylene glycol component.

8. The polyester resin according to any one of claims 1 to 7, wherein the polyester resin is used for coating a metal plate.

9. A composition for coating a metal plate, the composition comprising:

the polyester resin according to any one of claims 1 to 8; and
a curing agent, wherein
the polyester resin and the curing agent are included at a ratio of the polyester resin/the curing agent=98/2 to 50/50 (mass ratio).

10. The composition for coating a metal plate according to claim 9, wherein the curing agent is at least one curing agent selected from an amino resin, a phenol resin, and an isocyanate compound.

11. A laminated body comprising a layer including a reaction product of the polyester resin according to any one of claims 1 to 8, and a curing agent.

12. A coated metal plate comprising:

the composition for coating a metal plate according to claim 9 or 10; and
a metal plate, wherein
the composition for coating a metal plate is stacked on a surface of the metal plate.

13. A can comprising the coated metal plate according to claim 12 as a constituent material.

| INTERNATIONAL SEARCH REPORT | International application No. |
|---|---|
| | **PCT/JP2023/004993** |

**A. CLASSIFICATION OF SUBJECT MATTER**

*C08G 63/668*(2006.01)i; *B32B 15/08*(2006.01)i; *B32B 15/09*(2006.01)i; *B65D 1/00*(2006.01)i; *C09D 7/63*(2018.01)i; *C09D 7/65*(2018.01)i; *C09D 167/00*(2006.01)i; *C23C 26/00*(2006.01)i
FI:  C08G63/668; C09D167/00; C09D7/63; C23C26/00 A; B32B15/09 A; B32B15/08 G; B65D1/00 111; C09D7/65

According to International Patent Classification (IPC) or to both national classification and IPC

**B. FIELDS SEARCHED**

Minimum documentation searched (classification system followed by classification symbols)

C08G63/668-63/672; C09D167/00-167/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2013/0095263 A1 (EASTMAN CHEMICAL COMPANY) 18 April 2013 (2013-04-18) claims, paragraphs [0813], [0887], [0897], [0898], [0908]-[0922] | 1-4, 6, 8-13 |
| A | | 5, 7 |
| X | CN 113121800 A (ZHEJIANG HENGLAN TECHNOLOGY CO., LTD.) 16 July 2021 (2021-07-16) claims, paragraphs [0010], [0014], [0015], [0027]-[0065] | 1-7 |
| A | | 8-13 |
| X | WO 2015/108026 A1 (TOYOBO CO., LTD.) 23 July 2015 (2015-07-23) claims, paragraphs [0026], [0029], [0030], [0046], [0048]-[0062], tables 1, 2 | 1-7, 11 |
| A | | 8-10, 12-13 |
| X | CN 110628374 A (SHANGHAI TIANYANG HOTMELT ADHESIVES CO., LTD. et al.) 31 December 2019 (2019-12-31) claims, paragraphs [0001], [0016], [0022], table 1 | 1-6, 11 |
| A | | 7-10, 12-13 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2023/004993**

## INTERNATIONAL SEARCH REPORT

### C.    DOCUMENTS CONSIDERED TO BE RELEVANT

| Category* | Citation of document, with indication, where appropriate, of the relevant passages | Relevant to claim No. |
|---|---|---|
| X | JP 2013-231911 A (KAO CORP.) 14 November 2013 (2013-11-14) claims, paragraphs [0048], [0054], [0088]-[0113], table 1 | 1-7 |
| A | | 8-13 |
| A | JP 2020-94134 A (DIC CORP.) 18 June 2020 (2020-06-18) | 1-13 |
| A | WO 2019/244797 A1 (MITSUBISHI CHEMICAL CORP.) 26 December 2019 (2019-12-26) | 1-13 |
| A | US 2021/0163780 A1 (PPG INDUSTRIES OHIO, INC.) 03 June 2021 (2021-06-03) | 1-13 |
| A | US 2020/0263053 A1 (SWIMC LLC) 20 August 2020 (2020-08-20) | 1-13 |

Form PCT/ISA/210 (second sheet) (January 2015)

INTERNATIONAL SEARCH REPORT
**Information on patent family members**

International application No.

**PCT/JP2023/004993**

| Patent document cited in search report | | | Publication date (day/month/year) | Patent family member(s) | | | Publication date (day/month/year) |
|---|---|---|---|---|---|---|---|
| US | 2013/0095263 | A1 | 18 April 2013 | US | 2013/0095268 | A1 | |
| | | | | US | 2013/0095269 | A1 | |
| | | | | US | 2013/0095270 | A1 | |
| | | | | US | 2013/0095271 | A1 | |
| | | | | US | 2013/0095272 | A1 | |
| | | | | WO | 2013/055860 | A1 | |
| | | | | WO | 2013/055862 | A1 | |
| | | | | EP | 3260482 | A1 | |
| | | | | EP | 3521333 | A1 | |
| | | | | KR | 10-2014-0092297 | A | |
| | | | | KR | 10-2018-0135496 | A | |
| CN | 113121800 | A | 16 July 2021 | (Family: none) | | | |
| WO | 2015/108026 | A1 | 23 July 2015 | (Family: none) | | | |
| CN | 110628374 | A | 31 December 2019 | (Family: none) | | | |
| JP | 2013-231911 | A | 14 November 2013 | (Family: none) | | | |
| JP | 2020-94134 | A | 18 June 2020 | (Family: none) | | | |
| WO | 2019/244797 | A1 | 26 December 2019 | EP | 3812413 | A1 | |
| | | | | CN | 112272682 | A | |
| US | 2021/0163780 | A1 | 03 June 2021 | WO | 2020/023735 | A1 | |
| | | | | CN | 112805342 | A | |
| US | 2020/0263053 | A1 | 20 August 2020 | WO | 2019/060403 | A1 | |
| | | | | CN | 111133064 | A | |
| | | | | MX | 2020002960 | A | |

Form PCT/ISA/210 (patent family annex) (January 2015)

**REFERENCES CITED IN THE DESCRIPTION**

**Patent documents cited in the description**

- JP 2008081617 A